# EUROPÄISCHE PATENTSCHRIFT

(11) **EP 1 744 082 B1**
(45) Veröffentlichungstag und Bekanntmachung des Hinweises auf die Patenterteilung: **29.06.2011**
(21) Anmeldenummer: 05015463.2
(22) Anmeldetag: 15.07.2005
(51) Int. Cl.: F16H 57/02, F16H 1/16, F16C 23/04, F16C 33/08

(54) **Stellantrieb, insbesondere für ein Kraftfahrzeug**
Actuator, especially for a motor vehicle
Actionneur, notamment pour un véhicule automobile

(43) Veröffentlichungstag der Anmeldung: 17.01.2007
(73) Patentinhaber: Brose Fahrzeugteile GmbH & Co. KG, Würzburg, 97076 Würzburg (DE)
(72) Erfinder: Viernekes, Gerald, 97437 Hassfurt (DE); Zaps, Klaus, 97332 Volkach (DE)
(74) Vertreter: Reinhard - Skuhra - Weise & Partner GbR

(56) Entgegenhaltungen:
- EP-A- 0 869 295
- EP-A- 0 998 013
- DE-A1- 10 259 957
- DE-A1- 19 541 118
- FR-A- 2 375 572
- US-A- 4 589 297
- US-A- 4 987 791
- US-A- 5 216 929
- US-A- 6 014 915

## Beschreibung

Die Erfindung betrifft einen Stellantrieb mit einer Getriebeeinheit und einer Motoreinheit. Die Getriebeeinheit weist ein Getriebegehäuse und die Motoreinheit ein Motorgehäuse, einen innenliegenden Läufer mit einer Antriebswelle sowie ein zylinderförmiges Lagergehäuse auf der Antriebsseite auf. Das Lagergehäuse ragt zusammen mit einem Lager und der darin geführten Antriebswelle in eine Öffnung des Getriebegehäuses hinein. Die Erfindung betrifft zudem eine Verwendung des Stellantriebs in einem Kraftfahrzeug.

Stellantriebe, beispielsweise Fensterheber-Antriebe oder Antriebe zur Betätigung des Schiebedaches, sind bereits bekannt. Sie weisen eine Getriebeeinheit und eine Motoreinheit auf. Die Getriebeeinheit weist ein Schneckenrad und eine als Schneckenwelle realisierte Getriebewelle auf. Die Motoreinheit besteht aus einem Motorgehäuse, einem Bürstengehäuse und einem innenliegenden Läufer. Der Läufer ist dabei als sogenanntes Läuferpaket mit einer Vielzahl von auf der Motorwelle befestigten Lamellen ausgebildet. Die Getriebewelle und die Motorwelle können auch als gemeinsame Antriebswelle einteilig ausgeführt sein. Beim Zusammenbau des Stellantriebs wird das Motorgehäuse an das Getriebegehäuse angeflanscht. Ein zumeist zylinderförmiger Fortsatz des Bürstengehäuses ragt mit der Antriebswelle und der am freien Ende der Antriebswelle befindlichen Schneckenwelle in eine entsprechende Öffnung des Getriebegehäuses hinein. Der Fortsatz des Bürstengehäuses dient als Halterung für ein Lager, in welchem die Antriebswelle geführt wird. Der zylinderförmige Fortsatz kann auch als separates Lagergehäuse ausgebildet sein oder alternativ mit dem Bürstengehäuse ein gemeinsames Bürsten- und Lagergehäuse bilden.

Aus der EP 0 869 295 A2 ist ein Stellantrieb bekannt, bei welchem ein Motorgehäuse an ein Getriebegehäuse angeflanscht ist. Das Motorgehäuse ragt zum Teil in eine Getriebegehäuseöffnung, wobei der hineinragende Teil ein Kalottenlager umschließt, in welchem eine Motorwelle geführt ist.

Das dem Getriebe gegenüberliegende und im zylinderförmigen Lagergehäuse untergebrachte Lager dient als Ausgleichselement, um Fertigungstoleranzen beim Zusammenbau des Stellantriebs auszugleichen. Das Lager ist dabei in gewissem Maße axial in seiner Halterung verschiebbar. Ist das Lager eine Kalotte mit kugelförmiger Außenfläche, die sich in gewissen Grenzen in einer dazu korrespondierenden kugelförmigen Schale der Lagerhalterung bewegen kann, so können auch Verbiegungen und radiale Versätze der Antriebswelle ausgeglichen werden. Damit das Lager nach dem Zusammenbau in seiner Lage fixiert bleibt, wird eine Vorspannung auf dieses aufgebracht.

Ein häufiges Problem ist es, dass das mit dem zylindrischen Lagergehäuse in die Getriebegehäuseöffnung eingeführte Lager nach einiger Betriebszeit lose wird und im Falle einer Kalotte sich diese in ihrer Lagerschale verdrehen kann. Ursache hierfür sind Setzungsprozesse, denen Kunststoffen bei einer dauerhaften Belastung unterliegen. Dadurch verringert sich eine im Neuzustand noch vorhandene Vorspannung derart, dass sich im Laufe der Zeit das Lager bzw. die Kalotte in der Lagerhalterung zu lösen beginnt. Dies führt zu einem Verschleiß des Lagers bzw. der Kalotte und somit zu einem vorzeitigen Ausfall des Stellantriebs. Zudem nimmt die Geräuschentwicklung bei einer Betätigung des Stellantriebs zu.

Zur Lösung des Problems ist es bekannt, eine sogenannte Klemmbrille aus Federstahl einzusetzen, welche eine Anpresskraft auf das Lager bzw. auf die kugelförmige Außenfläche der Kalotte ausübt. Dadurch wird eine dauerhafte Reibkraft zwischen dem Getriebegehäuse und dem Lagergehäuse ausgeübt, so dass eine Verdrehsicherung und eine axiale Sicherung des Lagers erreicht werden. Nachteilig an dieser Lösung sind der erhöhte Teileaufwand und der Montageaufwand.

Aus der gattungsgemäßen US 4,589,297 A ist ein Verstellgetriebe für eine motorische Sitzverstellung in einem Kraftfahrzeug mit einem Getriebegehäuse und einer an einer Lagerwelle angeordneten Schnecke, welche am Getriebegehäuse in zwei in je eine Gehäuseausnehmung beidseits der Schnecke eingesetzten, die Welle halternden Wellenlagerteilen gelagert ist, bekannt. Dabei ist wenigstens eines der beiden Wellenlagerteile in der zugeordneten Gehäuseausnehmung in wenigstens einer die Lagerwellenachse enthaltenden Ebene kippbar gelagert. Das Lagerteil kann dabei als Ring mit Kugeloberfläche ausgebildet sein, welcher an Prismenflächen der Gehäuseausnehmung sowie eines Andrückteils anliegt.

Die Aufgabe der Erfindung besteht darin, einen vereinfachten Stellantrieb anzugeben, welcher eine dauerhafte Fixierung eines Lagers ermöglicht.

Diese Aufgabe wird durch einen Stellantrieb mit den im Anspruch 1 angegebenen Merkmalen gelöst. Vorteilhafte Ausgestaltungen und Weiterbildungen der Erfindung ergeben sich aus den abhängigen Ansprüchen 2 bis 13. In Anspruch 14 ist eine vorteilhafte Verwendung des Stellantriebs in einem Kraftfahrzeug angegeben.

Mittels der Klemmstellen wird vorteilhaft eine Vorspannkraft bewirkt, die dauerhaft das Lager über die vorgesehene Betriebsdauer des Stellantriebs fixiert. Die Vorspannkraft bewirkt ihrerseits einen vorteilhaft dauerhaften Reibschluss zwischen dem Außenumfang des Lagers und der dieser gegenüberliegenden Lagerschale. Insbesondere bilden Spalte als spannungsfreie Stellen Bereiche aus, in den sich eine Vorspannungreserve aufbauen kann, die dauerhaft auf das Lager wirkt.

Ein weiterer Vorteil ist, dass die Lebensdauer eines solchen Stellantriebs erhöht wird.

Weiterhin verringert sich in vorteilhafter Weise die Zunahme der Geräuschentwicklung eines solchen Stellantriebs über die Lebensdauer.

In einer Ausführungsform ist mittels der Klemmstellen eine Vorspannkraft aufbaubar, die über das Lagergehäuse auf das Lager wirkt. Die Vorspannkraft wirkt dabei vorzugsweise im Bereich des Lagers zumindest umlaufend. Damit ist der Vorteil verbunden, dass von allen Seiten eine gleichmäßige Vorspannkraft auf das Lager einwirkt.

In einer bevorzugten Ausführungsform ist mittels der Klemmstellen je eine umlaufende Vorspannkraft in einem jeweiligen axialen Endbereich des Lagers aufbaubar.

Durch die kräftemäßig seitliche Fassung des Lagers wird in vorteilhafter Weise eine zentrierende Kraft auf das Lager ausgeübt. Etwaige seitlich auf das Lager einwirkende Vorspannkräfte, welche unter Umständen zu Verkantungen des Lagers führen könnten, werden auf diese Weise vermieden. Zudem wird das Lager durch die zentrierende Kraft besonders gut axial und im Falle einer Kalotte als Lager gegen Verdrehungen fixiert. Das Lager bleibt sozusagen zwischen den beiden umlaufend aufgebrachten Vorspannkräften eingespannt.

In einer weiteren Ausführungsform bleibt der Innenquerschnitt der Getriebegehäuseöffnung im Bereich des Lagers im Wesentlichen gleich. Insbesondere ist dabei der Innenquerschnitt kreisförmig. Am Außenumfang des Lagergehäuses sind Erhebungen als Klemmstellen vorgesehen.

Durch die auf der Außenseite bzw. am Außenumfang des Lagergehäuses vorgesehenen Erhebungen wird gemäß der Erfindung die Vorspannkraft erzeugt. Die Erhebungen können sich dabei punktuell oder linienförmig auf dem Außenumfang des Lagergehäuses befinden. Die Erhebungen können z.B. auch die Form von Linsen oder Stege mit einer maximalen Höhe von 1 mm aufweisen. Mittels der Erhebungen wird eine Vorspannkraft über das Lagergehäuse auf den Außenumfang des dort untergebrachten Lagers bewirkt. Die Vorspannkraft bewirkt ihrerseits einen Reibschluss zwischen dem Außenumfang des Lagers und der dem Außenumfang gegenüberliegenden Lagerschale.

Die Erhebungen bilden vorzugsweise zumindest eine Wulst aus, welche am Außenumfang des Lagergehäuses verläuft, so dass die Vorspannkraft vorteilhaft gleichmäßig auf den Außenumfang des Lagers wirkt.

In einer bevorzugten Ausführungsform liegen die Erhebungen in einem jeweiligen axialen Endbereich des Lagers, so dass die jeweils umlaufende Vorspannkraft vorteilhaft zentrierend auf das Lager einwirken kann.

In einer alternativen Ausführungsform verringert sich im Bereich des Lagers der Querschnitt des Lagergehäuses axial in zumindest zwei Stufen. Zudem verringert sich der Innenquerschnitt der Getriebegehäuseöffnung in korrespondierender Weise axial in zumindest zwei Stufen. Die Getriebegehäuseöffnung verjüngt sich dabei axial in Richtung zur Schneckenwelle.

Durch die zentrierende Wirkung der Verjüngung wird beim Zusammenbau des Stellantriebs außerdem das Einschieben des Lagergehäuses in die Getriebegehäuseöffnung erleichtert. Nach dem Einschieben des Lagergehäuses, insbesondere kurz vor Erreichen der endgültigen Einschubposition, verklemmen sich die korrespondierenden Stufen zu Klemmstellen gemäß der Erfindung gegeneinander.

Damit ist der große Vorteil verbunden, dass eine dauerhafte Vorspannkraft durch die Verklemmung der jeweiligen Stufen bewirkt wird, welche ihrerseits einen vorteilhaft dauerhaften Reibschluss zwischen dem Außenumfang des Lagers und der dieser gegenüberliegenden Lagerschale bewirkt. Vorzugsweise ist die Stufenhöhe kleiner als 1 mm, insbesondere liegt diese in einem Bereich von 0,1 bis 0,5 mm.

Vorzugsweise verringert sich der Querschnitt des Lagergehäuses im axialen Endbereich des Lagers in je einer Stufe. In entsprechender Weise verringert sich der Innenquerschnitt der Getriebegehäuseöffnung axial in zwei Stufen. Dadurch verklemmen miteinander korrespondierende Stufen im Innenquerschnitt der Getriebegehäuseöffnung und am Außenumfang des Lagergehäuses zu den erfindungsgemäßen Klemmstellen. Die dabei entstehenden umlaufenden Vorspannkräfte wirken vorteilhaft zentrierend auf das Lager.

Insbesondere können die Stufen so abgeschrägt sein, dass sich diese in einer Verrastung verklemmen. Vorzugsweise sind die Stufen in diesem Fall in einem Bereich von 30° bis 60° abgeschrägt.

Durch die Verrastung, die schlagartig erfolgt, wird eine besonders stabile Verklemmung bewirkt, die beim Zusammenbau des Stellantriebs zudem als Klickgeräusch akustisch wahrgenommen werden kann. Dieses Klickgeräusch kann vorteilhaft als Quittierungssignal für eine erfolgreiche Verrastung beim Zusammenbau eines Stellantriebs betrachtet werden.

Vorzugsweise ist das Lager für beide Ausführungsformen eine Kalotte mit einer kugelförmigen Außenfläche. Diese Außenfläche kann sich in gewissen Grenzen in einer dazu korrespondierenden kugelförmigen Schale des Lagergehäuses bewegen. Eine durch Fertigungs- und/oder Montagetoleranzen bedingte Verbiegung sowie ein radialer Versatz der Antriebswelle in geringem Maße werden durch die mögliche Ausgleichsverdrehung der Kalotte vorteilhaft kompensiert.

Die Kalotte ist vorzugsweise aus einem Sintermaterial gefertigt. Dadurch kann die poröse Struktur des Sintermaterials ein Schmiermittel, insbesondere ein Schmieröl, zur Schmierung der im Inneren der Kalotte geführten Antriebswelle aufnehmen.

In einer weiteren Ausführungsform ist das Lagergehäuse ein Teil eines kombinierten Bürsten- und Lagergehäuses. Auf der Außenseite des entsprechenden Bürstengehäuses sind üblicherweise Steckkontakte vorgesehen, die elektrisch im Inneren des Bürstengehäuses zu den Bürsten im Kommutatorbereich des Läufers geführt werden.

Durch ein solches kombiniertes Bürsten- und Lagergehäuse verringern sich vorteilhaft die Bauteilanzahl und die Anzahl der Montageschritte für einen Stellantrieb.

In einer besonderen Ausführungsform ist das Lagergehäuse bzw. das kombinierte Bürsten- und Lagergehäuse mit den Erhebungen, Wulsten oder Stufen ein Kunststoff-Spritzgussteil. Mögliche Kunststoffe sind z.B. Polypropylen oder Polyamid. Ein besonders geeigneter Kunststofftyp ist PA 6.6.

Der Kunststoff weist eine gewisse Elastizität auf, die zum Aufbau einer Vorspannkraft als Reaktion auf eine mechanische Verformung besonders geeignet ist. Im Falle des Lagergehäuses wird die elastische mechanische Verformung durch resultierende Biegemomente beim Einführen in die Öffnung des Getriebegehäuses bewirkt.

Durch das Spritzgussverfahren lässt sich weiterhin vorteilhaft ein komplexes Bauteil, wie z.B. das kombinierte Bürsten-und Lagergehäuse mit dem integrierten Motorlager, in einem Fertigungsschritt herstellen.

Ein Stellantrieb gemäß der Erfindung lässt sich vorteilhaft in einem Kraftfahrzeug verwenden, da insbesondere dort eine hohe Anzahl von kompakten Stellantrieben, wie z.B. zum Fensterheben oder zum Öffnen und Schließen eines Schiebedachs, benötigt wird.

Weitere vorteilhafte Eigenschaften der Erfindung ergeben sich aus deren beispielhafter Erläuterung anhand der Figuren. Es zeigt:
- FIG 1: eine Schnittzeichnung eines beispielhaften Stellantriebs mit einem Getriebegehäuse und mit einem Motor-gehäuse gemäß der Erfindung,
- FIG 2: eine perspektivische schematische Ansicht eines kombinierten Bürsten- und Lagergehäuses mit erfindungsgemäßen Erhebungen gemäß FIG 1,
- FIG 3: eine perspektivische schematische Ansicht der FIG 2 in einer Aufrissdarstellung entlang der Antriebswelle des Stellantriebs,
- FIG 4: eine vergrößerte Darstellung eines in eine Getriebegehäuseöffnung hineinragenden Lagergehäuses gemäß FIG 1,
- FIG 5: eine Schnittzeichnung einer beispielhaft alternativen Lösung zum Aufbau einer Vorspannung mittels erfindungsgemäßer Stufen und vor Erreichen einer endgültigen Einschubposition des Lagergehäuses in der Getriebegehäuseöffnung und
- FIG 6: eine Schnittzeichnung gemäß FIG 5 nach Erreichen der endgültigen Einschubposition des Lagergehäuses in der Getriebegehäuseöffnung.

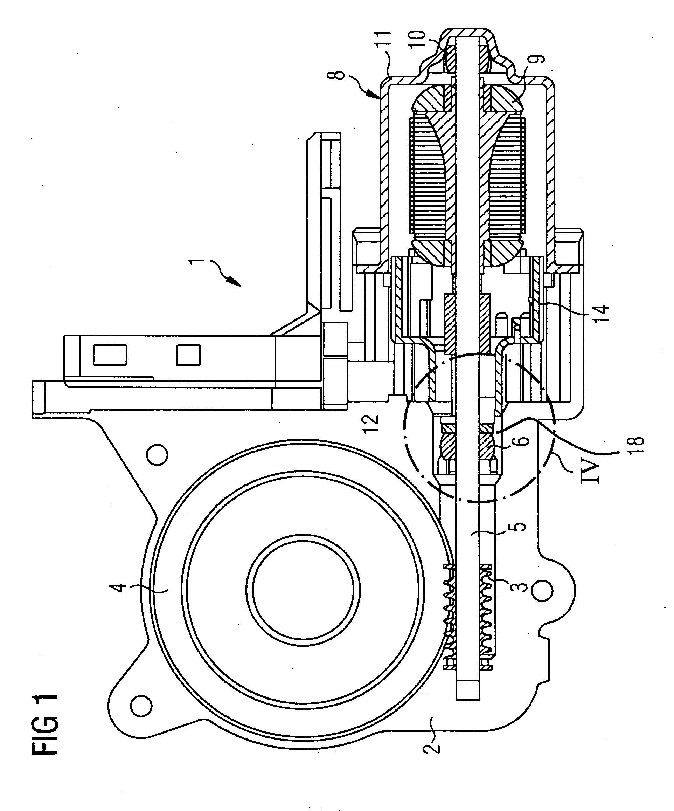

FIG 1 zeigt eine Schnittzeichnung eines beispielhaften Stellantriebs 1 mit einer Getriebeeinheit 2 und einer Motoreinheit 8. Die Getriebeeinheit 2 weist ein Getriebegehäuse 12 auf, in welchem ein Schneckenrad 4 sowie eine in das Schneckenrad 4 eingreifende Schneckenwelle 4 untergebracht sind. Die Motoreinheit 8 besteht aus einem Motorgehäuse 11, aus einem darin untergebrachten Läufer 9 mit einer Antriebswelle 5 sowie aus einem Lagergehäuse 18 auf der Antriebsseite der Motoreinheit 8. Die Schneckenwelle 3 sitzt auf dem freien Ende der Antriebswelle 5, wobei diese von der Motoreinheit 8 angetrieben wird und zum Teil im Motorgehäuse 11 untergebracht ist. Die Antriebswelle 5 ist motorseitig in einem der Getriebeeinheit 2 gegenüberliegenden Lager 6 sowie in einem Motorendlager 10 geführt. Im Beispiel der FIG 1 ist die Antriebswelle 5 einteilig ausgeführt. Eine zweiteilige Ausführung der Antriebswelle 5 in Motorwelle und Getriebewelle mit einem dazwischenliegenden Verbindungsglied ist ebenfalls denkbar.

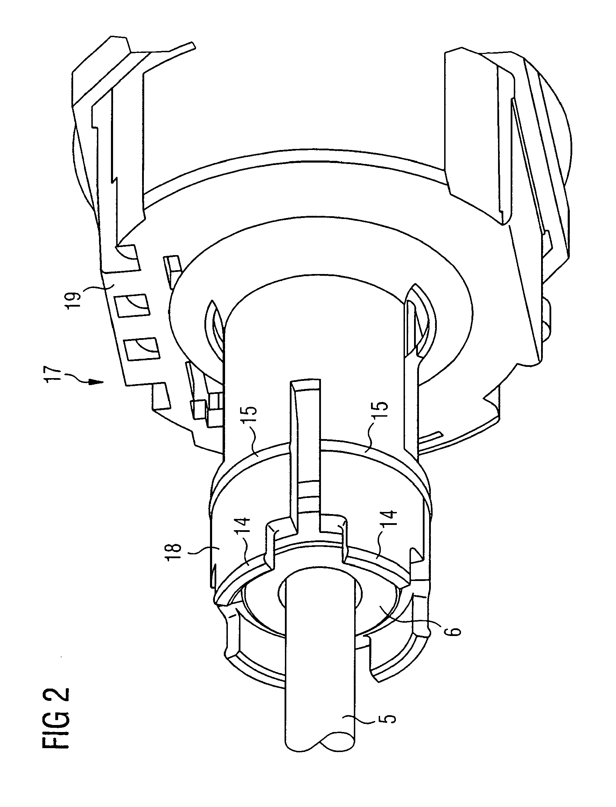

FIG 2 zeigt perspektivisch eine schematische Ansicht eines kombinierten Bürsten- und Lagergehäuses 17 entsprechend der FIG 1. Das Bürsten- und Lagergehäuse 17 setzt sich aus einem Bürstengehäuse 19 mit darin untergebrachten elektrischen Anschlüssen und Kohlebürsten für den Kommutator des Läufers 9 sowie aus einem Lagergehäuse 18 mit dem darin untergebrachten Lager 6 zusammen. Das Lagergehäuse 18 ist im Wesentlichen zylindrisch ausgeführt, so dass dieses leicht in eine korrespondierende Öffnung 7 des Getriebegehäuses 12 eingeführt werden kann.

Gemäß der Erfindung sind Erhebungen 14, 15 als Klemmstellen auf der Außenseite bzw. am Außenumfang des Lagergehäuses 18 angebracht, welche gemäß einer Ausführungsform des Stellantriebs als umlaufende Wulste ausgebildet sind. Die Erhebungen 14, 15 bzw. die umlaufenden Wulste sind gemäß einer weiteren Ausführungsform so angeordnet, dass in axialer Richtung gesehen je eine Wulst 14, 15 im Endbereich des Lagers 6 angeordnet ist. Das Lager 6 ist im Beispiel der FIG 2 gemäß einer weiteren erfindungsgemäßen Ausführungsform eine Kalotte.

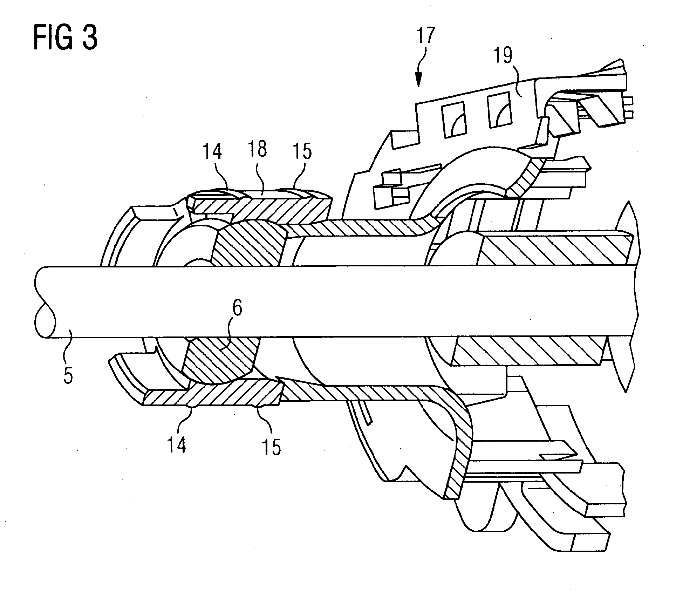

FIG 3 zeigt eine perspektivische schematische Ansicht der FIG 2 in einer Aufrissdarstellung entlang der Antriebswelle 5 des Stellantriebs 1. In dieser Darstellung ist insbesondere die Einbettung der Kalotte 6 mit ihrer kugelförmigen Außenfläche in das Lagergehäuse 18 erkennbar.

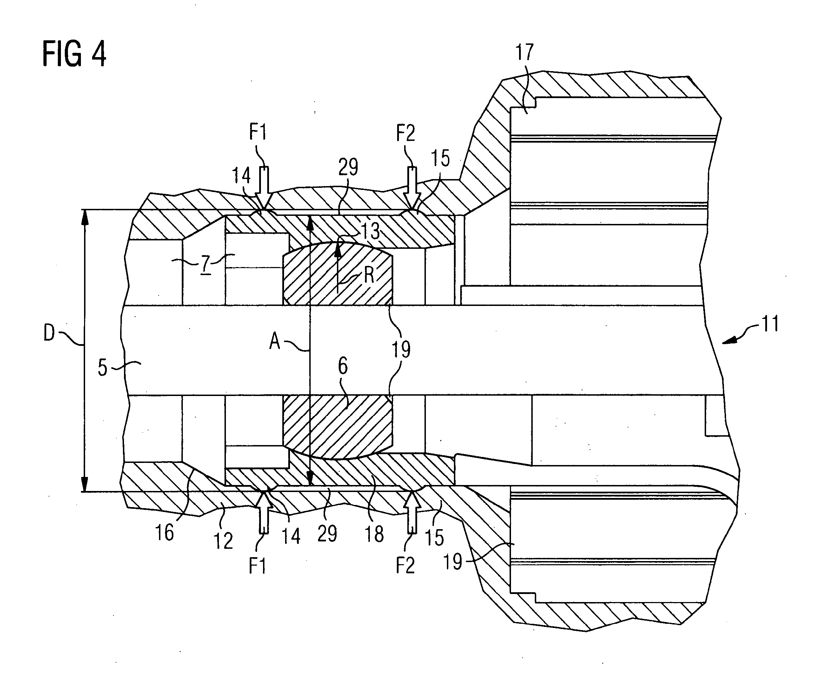

FIG 4 zeigt eine vergrößerte Darstellung eines in eine Getriebegehäuseöffnung 7 hineinragenden Lagergehäuses 18 gemäß FIG 1. Im rechten Teil der FIG 4 ist ein Teil des Bürstengehäuses 17 eines kombinierten Bürsten- und Lagergehäuses 11 dargestellt. Im linken Teil der Figur ist das entsprechende zylinderförmige Lagergehäuse 18 mit dem Lager 6 erkennbar. Im eingebauten Zustand des Stellantriebs 1 ist der eingezeichnete Außendurchmesser A des Lagergehäuses 18 geringfügig kleiner als der Innendurchmesser D der Getriebegehäuseöffnung 7. Dies wird durch die Beabstandung des Außenumfangs des Lagergehäuses 18 mittels der erfindungsgemäßen Erhebungen 14, 15 bzw. der ringförmigen Wulste bewirkt. Die sich zwischen den beiden Wulsten 14, 15 aufbauenden Vorspannkräfte F1, F2 wirken dabei zentrierend zur Mitte des Lagers 6 hin. Der sich zwischen den Wulsten ausbildende spannungsfreie Spalt 29 bildet vorteilhaft einen Bereich zum Aufbau einer Vorspannungsreserve. In diesen Bereich kann sich dann das Lagergehäuse 18 sozusagen "hineinwölben".

Die FIG 4 zeigt bereits die Ausführung des Lagers 6 als Kalotte, in welcher die Antriebswelle 5 geführt ist. Mit R ist der maximale Radius der kugelförmigen Außenfläche bezeichnet. Mit dem Bezugszeichen 13 ist die Kontur der gegenüberliegenden Lagerschale gekennzeichnet. Die Kalotte 6 ist an ihrer Innenseite 19 angefast, so dass Ausgleichsverdrehungen durch die Kalotte 6 in gewissem Grad möglich sind. Die Getriebegehäuseöffnung 7 weist eine Verjüngung 16 in axialer Richtung zur Schneckenwelle 3 auf, die der Zentrierung der Schneckenwelle 3 beim Einführen der Antriebswelle 5 in die Getriebegehäuseöffnung 7 dient.

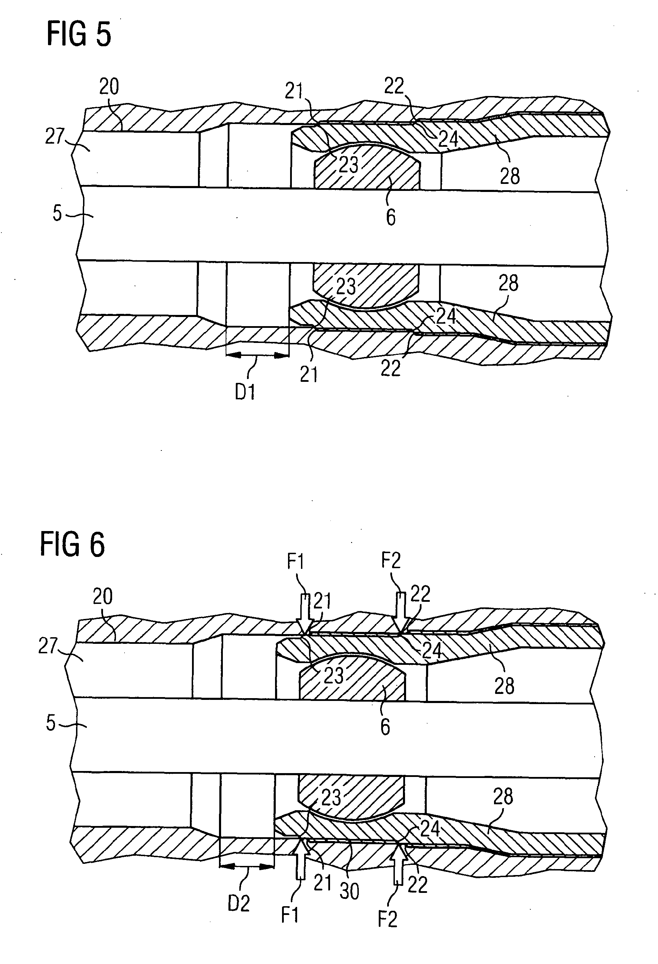

FIG 5 zeigt eine Schnittzeichnung einer beispielhaft alternativen Lösung zum Aufbau einer Vorspannung F1, F2 mittels Stufen 21-24 und vor Erreichen einer endgültigen Einschubposition des Lagergehäuses 28 in der Getriebegehäuseöffnung 27. Im Beispiel der FIG 5 sind sowohl die lagergehäuseseitigen Stufen 23, 24 als auch die dazu korrespondierenden getriebegehäuseseitigen Stufen 21, 22 bereits abgeschrägt. Der Winkel beträgt zwischen 30 und 60°, im Beispiel der FIG 5 in etwa 45°. Auf diese Weise wird ein Einschieben des Lagergehäuses 6 in die Öffnung 27 des Getriebegehäuses 12 erleichtert. Mit D1 ist der Abstand zu einer öffnungsseitigen weiteren Verjüngung und einem Ende des Lagergehäuses 28 eingezeichnet. Die vorliegende FIG 5 zeigt außerdem, dass das Lagergehäuse 28 in dieser Einschubposition noch relativ lose in der Getriebegehäuseöffnung 27 eingeschoben ist. Dies zeigt auch der zum Verständnis vergrößert dargestellte Spalt zwischen der Kalotte 6 und der diese umgebenden Lagerschale des Lagergehäuses 28.

FIG 6 zeigt eine Schnittzeichnung gemäß FIG 5 nach Erreichen der endgültigen Einschubposition des Lagergehäuses 28 in der Getriebegehäuseöffnung 27. Im Beispiel der FIG 6 ist dies daran zu erkennen, dass sich der Abstand D2 zwischen der öffnungsseitigen weiteren Verjüngung und dem Ende des Lagergehäuses 28 geringfügig verringert hat, wie z.B. in einem Bereich von 0,5 mm bis 2 mm. Nach Erreichen der endgültigen Einschubposition sind nun die miteinander korrespondierenden Stufen 21, 23 sowie 22, 24 so verrastend verklemmt, dass in den Überschneidungsbereichen die erfindungsgemäße Vorspannung F1, F2 aufgebaut wird. Dies ist in FIG 6 auch daran ersichtlich, dass nun der noch in FIG vorhandene Spalt zwischen der Kalottenoberfläche und der dieser gegenüberliegenden Lagerschale verschwunden ist. Die Kalotte 6 ist nun in ihrer Position dauerhaft fixiert. Zugleich bilden sich Spalte 30, 31 als spannungsfreie Stellen aus, die als Bereiche zum Aufbau einer Vorspannungsreserve dienen.

## Patentansprüche

1. Stellantrieb, mit einer Getriebeeinheit (2) und einer Motoreinheit (8), wobei die Getriebeeinheit (2) ein Getriebegehäuse (12) und die Motoreinheit (8) ein Motorgehäuse (11), einen innenliegenden Läufer (9) mit einer Antriebswelle (5) sowie ein Lagergehäuse (18, 28) auf der Antriebsseite aufweist, wobei das Lagergehäuse (18, 28) zusammen mit einem darin untergebrachten Lager (6) und der darin geführten Antriebswelle (5) in eine Öffnung (7, 27) des Getriebegehäuses (12) hineinragt,
**dadurch gekennzeichnet,**
**dass** das Lagergehäuse (18, 28) im Wesentlichen zylindrisch ausgeführt ist und die Außenseite des Lagergehäuses (18, 28) und die Innenseite der Getriebegehäuseöffnung (7, 27) geometrisch so aufeinander abgestimmt sind, dass sich nach Zusammenbau des Stellantriebs zwischen diesen Klemmstellen (14, 15, 21-24) und spannungsfreie Stellen (29-31) ausbilden.

2. Stellantrieb nach Anspruch 1,
**dadurch gekennzeichnet,**
**dass** mittels der Klemmstellen (14, 15, 21-24) eine Vorspannkraft (F1, F2) aufbaubar ist, die über das Lagergehäuse (18, 28) auf das Lager (6) wirkt.

3. Stellantrieb nach Anspruch 2,
**dadurch gekennzeichnet,**
**dass** mittels der Klemmstellen (14, 15, 21-24) zumindest eine umlaufende Vorspannkraft (F1, F2) im Bereich des Lagers (6) aufbaubar ist.

4. Stellantrieb nach Anspruch 3,
**dadurch gekennzeichnet,**
**dass** mittels der klemmstellen (14, 15, 21-24) je eine umlaufende Vorspannkraft (F1, F2) in einem jeweiligen axialen Endbereich des Lagers (6) aufbaubar ist.

5. Stellantrieb nach einem der vorigen Ansprüche,
**dadurch gekennzeichnet,**
- **dass** der Innenquerschnitt der Getriebegehäuseöffnung (7) im Bereich des Lagers (6) im Wesentlichen gleich bleibt und
- **dass** Erhebungen (14, 15) als Klemmstellen am Außenumfang des Lagergehäuses (18) vorgesehen sind.

6. Stellantrieb nach Anspruch 5,
**dadurch gekennzeichnet,**
**dass** die Erhebungen (14, 15) zumindest eine Wulst ausbilden, welche am Außenumfang des Lagergehäuses (18) verläuft.

7. Stellantrieb nach Anspruch 5 oder 6,
**dadurch gekennzeichnet,**
**dass** die Erhebungen (14, 15) in einem jeweiligen axialen Endbereich des Lagers (6) liegen.

8. Stellantrieb nach Anspruch 1 bis 4,
**dadurch gekennzeichnet,**
- **dass** sich der Querschnitt des Lagergehäuses (28) im Bereich des Lagers (6) axial in zumindest zwei Stufen (23, 24) verringert,
- **dass** sich in korrespondierender Weise der Innenquerschnitt der Getriebegehäuseöffnung (27) axial in zumindest zwei Stufen (21, 22) verringert, und
- **dass** korrespondierende Stufen (21, 23; 22, 24) nach dem Einschieben des Lagergehäuses (28) in die Getriebegehäuseöffnung (27) die Klemmstellen ausbilden.

9. Stellantrieb nach Anspruch 8,
**dadurch gekennzeichnet,**
- **dass** sich der Querschnitt des Lagergehäuses (28) im axialen Endbereich des Lagers (6) in je einer Stufe (23, 24) verringert, und
- **dass** sich in korrespondierender Weise der Innenquerschnitt der Getriebegehäuseöffnung (27) dazu axial in zwei Stufen (21, 22) verringert.

10. Stellantrieb nach Anspruch 8 oder 9,
**dadurch gekennzeichnet,**
**dass** die korrespondierenden Stufen (21, 23; 22, 24) so abgeschrägt sind, dass sich diese in einer Verrastung verklemmen.

11. Stellantrieb nach einem der vorigen Ansprüche,
**dadurch gekennzeichnet,**
**dass** das Lager (6) eine Kalotte ist.

12. Stellantrieb nach einem der vorigen Ansprüche,
**dadurch gekennzeichnet,**
**dass** das Lagergehäuse (18, 28) ein Teil eines kombinierten Bürsten- und Lagergehäuses (17) ist.

13. Stellantrieb nach Anspruch 12,
**dadurch gekennzeichnet,**
**dass** das Lagergehäuse (18, 28) bzw. das kombinierte Bürsten- und Lagergehäuse (17) ein Kunststoff-Spritzgussteil ist.

14. Verwendung eines Stellantriebs nach zumindest einem der vorigen Ansprüche in einem Kraftfahrzeug.

## Claims

1. Actuating drive, having a transmission unit (2) and a motor unit (8), wherein the transmission unit (2) comprises a transmission housing (12) and the motor unit (8) comprises a motor housing (11), an inner rotor (9) having a drive shaft (5), and a bearing housing (18, 28) on the drive side, wherein the bearing housing (18, 28) together with a bearing (6) accommodated therein and the drive shaft (5) guided therein protrudes into an opening (7, 27) of the transmission housing (12),
**characterised in that** the bearing housing (18, 28) is designed substantially cylindrically and the outer side of the bearing housing (18, 28) and the inner side of the transmission housing opening (7, 27) are geometrically tailored to each other such that upon assembly of the actuating drive, clamping points (14, 15, 21-24) and tension-free points (29-31) are formed therebetween.

2. Actuating drive as claimed in claim 1, **characterised in that** by means of the clamping points (14, 15, 21-24) a pretensioning force (F1, F2) can be built up which acts upon the bearing (6) via the bearing housing (18, 28).

3. Actuating drive as claimed in claim 2, **characterised in that** by means of the clamping points (14, 15, 21-24) at least one circumferential pretensioning force (F1, F2) can be built up in the region of the bearing (6).

4. Actuating drive as claimed in claim 3, **characterised in that** by means of the clamping points (14, 15, 21-24) a circumferential pretensioning force (F1, F2) can be built up in each case in a respective axial end region of the bearing (6).

5. Actuating drive as claimed in any one of the preceding claims, **characterised in that**
the inner cross-section of the transmission housing opening (7) remains substantially the same in the region of the bearing (6) and
elevations (14, 15) are provided as clamping points on the outer periphery of the bearing housing (18).

6. Actuating drive as claimed in claim 5, **characterised in that** the elevations (14, 15) form at least one bead which extends on the outer periphery of the bearing housing (18).

7. Actuating drive as claimed in claim 5 or 6, **characterised in that** the elevations (14, 15) are located in a respective axial end region of the bearing (6).

8. Actuating drive as claimed in claim 1 to 4, **characterised in that**
the cross-section of the bearing housing (28) is reduced axially in at least two steps (23, 24) in the region of the bearing (6),
in a corresponding manner the inner cross-section of the transmission housing opening (27) is reduced axially in at least two steps (21, 22), and
after insertion of the bearing housing (28) into the transmission housing opening (27) corresponding steps (21, 23; 22, 24) form the clamping points.

9. Actuating drive as claimed in claim 8, **characterised in that**
the cross-section of the bearing housing (28) is reduced in one step (23, 24) in each case in the axial end region of the bearing (6), and
in a corresponding manner the inner cross-section of the transmission housing opening (27) is reduced with respect thereto axially in two steps (21, 22).

10. Actuating drive as claimed in claim 8 or 9, **characterised in that** the corresponding steps (21, 23; 22, 24) are bevelled in such a manner that they become jammed in a catch mechanism.

11. Actuating drive as claimed in any one of the preceding claims, **characterised in that** the bearing (6) is a spherical calotte.

12. Actuating drive as claimed in any one of the preceding claims, **characterised in that** the bearing housing (18, 28) is part of a combined brush and bearing housing (17).

13. Actuating drive as claimed in claim 12, **characterised in that** the bearing housing (18, 28) or the combined brush and bearing housing (17) is a synthetic material injection-moulding part.

14. Use of an actuating drive as claimed in at least one of the preceding claims in a motor vehicle.

## Revendications

1. Servomoteur, doté d'une unité de transmission (2) et d'une unité de motorisation (8), l'unité de transmission (2) présentant un carter de transmission (12) et l'unité de motorisation (8) présentant un carter de moteur (11), un rotor (9) situé à l'intérieur avec un arbre d'entraînement (5) ainsi qu'un logement de palier (18, 28) côté entraînement, le logement de palier (18, 28) conjointement avec un palier (6) dans lequel il est logé et l'arbre d'entraînement dans lequel il est guidé (5) faisant saillie dans un orifice (7, 27) du logement de transmission (12),
**caractérisé par le fait que** le logement de palier (18, 28) est réalisé essentiellement de manière cylindrique et la face extérieure du logement de palier (18, 28) et la face intérieure de l'orifice de logement de transmission (7, 27) sont assortis géométriquement de telle sorte que, après l'assemblage du servomoteur, des points exempts de tension (29-31) se forment entre ces points de serrage (14, 15, 21-24).

2. Servomoteur selon la revendication 1, **caractérisé par le fait qu'**une force de précontrainte (F1, F2) peut être établie à l'aide des points de serrage (14, 15, 21-24), qui agit sur le palier (6) par l'intermédiaire du logement de palier (18, 28).

3. Servomoteur selon la revendication 2, **caractérisé par le fait qu'**au moins une force de précontrainte périphérique (F1, F2) peut être établie dans la zone du palier (6) à l'aide des points de serrage (14, 15, 21-24).

4. Servomoteur selon la revendication 3, **caractérisé par le fait qu'**une force de précontrainte périphérique (F1, F2) respective peut être établie dans une zone terminale axiale correspondante du palier (6) à l'aide des points de serrage (14, 15, 21-24).

5. Servomoteur selon l'une des revendications précédentes, **caractérisé par le fait que**
la section interne de l'orifice du carter de transmission (7) reste essentiellement identique dans la zone du palier (6) et
des proéminences (14, 15) sont prévues en tant que points de serrage au niveau de la circonférence du logement de palier (18).

6. Servomoteur selon la revendication 5, **caractérisé par le fait que** les proéminences (14, 15) forment au moins un renflement qui suit la circonférence du logement de palier (18).

7. Servomoteur selon la revendication 5 ou 6, **caractérisé par le fait que** les proéminences (14, 15) se trouvent dans une zone terminale axiale respective du palier (6).

8. Servomoteur selon les revendications 1 à 4, **caractérisé par le fait que**
la section du logement de palier (28) se rétrécit dans la zone du palier (6) axialement en au moins deux niveaux (23, 24),
de manière correspondante, la section interne de l'orifice du carter de transmission (27) se rétrécit axialement en au moins deux niveaux (21, 22), et
des niveaux correspondants (21, 23 ; 22, 24) forment les points de serrage après l'insertion du logement de palier (28) dans l'orifice du carter de transmission (27).

9. Servomoteur selon la revendication 8, **caractérisé par le fait que**
la section du logement de palier (28) dans la zone terminale axiale du palier (6) se rétrécit en chacune un niveau (23, 24), et
de manière correspondante, la section interne de l'orifice du carter de transmission (27) se rétrécit en outre axialement en deux niveaux (21, 22).

10. Servomoteur selon la revendication 8 ou 9, **caractérisé par le fait que** les niveaux correspondants (21, 23 ; 22, 24) sont chanfreinés de telle sorte que ceux-ci se bloquent dans un verrouillage.

11. Servomoteur selon l'une des revendications précédentes, **caractérisé par le fait que** le palier (6) est une calotte.

12. Servomoteur selon l'une des revendications précédentes, **caractérisé par le fait que** le logement de palier (18, 28) est une partie d'un logement combiné de palier et de balai (17).

13. Servomoteur selon la revendication 12, **caractérisé par le fait que** le logement de palier (18, 28) ou le logement combiné de palier et de balai (17) est un moulage par injection.

14. Utilisation d'un servomoteur selon au moins l'une des revendications précédentes dans un véhicule automobile.
